(19) Europäisches Patentamt
European Patent Office
Office européen des brevets

(11) Publication number: **0 469 646 A1**

# (12) EUROPEAN PATENT APPLICATION

(21) Application number: **91200865.3**

(22) Date of filing: **12.04.91**

(51) Int. Cl.[5]: **C08F 299/02**, C08G 59/14, C08G 59/42, C09D 163/10

(30) Priority: **02.08.90 EP 90202106**

(43) Date of publication of application: **05.02.92 Bulletin 92/06**

(84) Designated Contracting States: **AT BE CH DE DK ES FR GB GR IT LI LU NL SE**

(71) Applicant: **AKZO N.V.**
**Velperweg 76**
**NL-6824 BM Arnhem(NL)**

(72) Inventor: **Buter, Roelof**
**Surinkhof 1**
**NL-6952 HT Dieren(NL)**
Inventor: **Postma, Peter Martin**
**Wissenkerkepad 23**
**NL-6845 BT Arnhem(NL)**

(74) Representative: **Schalkwijk, Pieter Cornelis et al**
**AKZO N.V., Patent Department (Dept. CO), P.O. Box 9300**
**NL-6800 SB Arnhem(NL)**

## (54) Hybrid polymer, aqueous dispersions and coating composition therefrom.

(57) A hybrid polymer of a core/shell structure is provided which is based upon (A) a polymer (core) of an unsaturated fatty acid group functionalized poly(epoxyester) onto which (B) at least one addition polymer-based chain (shell) has been grafted. Also provided are aqueous dispersions of these hybrid polymers and coating compostions therefrom, which coating compositions are especially suited for use as clear coatings, pigmented coatings and primers/surfacers.

EP 0 469 646 A1

## Background of the Invention

The present invention relates generally to a water-dispersible hybrid polymer of a core/shell structure, which comprises (A) a polymer (core) onto which (B) at least one addition polymer-based chain (shell) has been grafted. The present invention also relates generally to aqueous dispersions of these hybrid polymers and coating compositions based thereon, which coating compositions are especially suitable for use as primers/surfacers, clear coatings and pigmented top coatings.

Hybrid polymers comprising a polymer backbone onto which at least one addition polymer-based chain has been grafted are, in a general sense, known in the art, as is their use in coating compositions. See, for example, DE-A-2304680, US3932562 and US4025471.

Aqueous versions of such are also known. See, for example, BE854523, EP-A-0116225, EP-A-0287144, US4028294, US4116901, US4151131, US4212776, US4212781, US4285847, US4297261, US4303565, US4308185, US4443568, US4564648, JP-A-63309516 and Bauer, Ronald S., "Recent Developments in Water Borne Epoxy Resins," Journal of Waterborne Coatings, 5 (1982), pp. 5-17.

## Summary of the Invention

A particular type of such hybrid polymer has now been discovered which, when dispersed in an aqueous medium, produces stable dispersions with relatively low viscosities even at concentrations of 40% by weight and higher. The hybrid polymers themselves possess a relatively low acid number, which is comparable to polymers used in organic solvents.

Further, aqueous coating compositions based upon these aqueous dispersions may be formulated at quite high solids contents, and coating compositions can be formulated from these aqueous dispersions to result in films displaying a good combination of physical and mechanical properties such as chemical, water and acid resistance, as well as good durability.

Such advantageous hybrid polymers, as well as aqueous dispersions and coating compositions therefrom, are neither specifically known from nor suggested by the aforementioned prior art.

In accordance with the present invention, there is provided a hybrid polymer which comprises (A) a polymer (core) onto which (B) at least one addition polymer-based chain (shell) has been grafted, characterized in that:

i. the polymer (A) comprises an unsaturated fatty acid group functionalized poly(epoxyester), which is the reaction product of

(1) an epoxy-terminated poly(epoxyester) and

(2) an unsaturated fatty acid component, at least a portion of which comprises an unsaturated fatty acid with conjugated double bonds;

ii. the addition polymer-based chain (B) comprises an acid number of from about 20 to about 100; and

iii. the at least one addition polymer-based chain (B) is grafted onto polymer (A) via the addition polymerization of free-radically polymerizable monomers in the presence of the unsaturated fatty acid group functionalized poly(epoxyester).

It is preferred that the hybrid polymer comprises

(A) from about 40 wt% to about 90 wt% of the polymer (core) and

(B) from about 10 wt% to about 60 wt% of the addition polymer-based chains (shell),

based upon the total weight of the hybrid polymer. Within these boundaries it has been found that the hybrid polymers possess the best mixture of advantageous properties from the individual components.

Advantageous properties of poly(epoxyesters) include, for example, good adhesion to many substrates, good mechanical resistance and a good balance of hardness and flexibility. Advantageous properties of addition polymers include, for example, good chemical resistance.

The hybrid polymers in accordance with the present invention are readily water dispersible upon at least partial neutralization of the acid groups of the addition polymer-based chains (B). Aqueous dispersion of such are produced by at least partially neutralizing the acid groups and dispersing the so-neutralized hybrid polymers in an aqueous medium.

The aqueous dispersions of the hybrid polymers in accordance with the present invention are suitable for a variety of uses but especially as aqueous coating compositions. They are especially suited for use as primers/surfacers, clear coatings and pigmented top coatings because they can be formulated to result in films possessing a desirable combination of chemical, water and acid resistance, and excellent durability required for the ulitmate end use.

These and other features and advantages of the present invention will be more readily understood by those skilled in the art from a reading of the following detailed description with reference to the specific

examples contained therein.

Detailed Description of the Preferred Embodiments

As indicated earlier, the present invention concerns a particular water-dispersible hybrid polymer, aqueous dispersion of such hybrid polymer and coating composition based thereon.

The hybrid polymer, in its overall concept, comprises (A) a polymer (core) onto which (B) at least one addition polymer-based chain (shell) has been grafted via the addition polymerization of free-radically polymerizable monomers in the presence of the polymer (core).

The polymer (A) comprises an unsaturated fatty acid group functionalized poly(epoxyester) which is the reaction product of

(1) an epoxy-terminated poly(epoxyester) and

(2) an unsaturated fatty acid component, at least a portion of which comprises an unsaturated fatty acid with conjugated double bonds.

The epoxy-terminated poly(epoxyester) preferably comprises the reaction product of

n moles of a bisepoxide having a number average molecular weight (Mn) in the range of from about 150 to about 2000, and

n-1 moles of a dicarboxylic acid having 4-40 carbons atoms,

wherein n = 2-10. The Mn of the resulting poly(epoxyester) preferably ranges from about 400 to about 20000, more preferably from about 2000 to about 20000.

As suitable bisepoxides may be mentioned a wide variety of aliphatic, aromatic, araliphatic and cycloaliphatic bisepoxides as well as mixtures thereof. A number of suitable specific examples may be found by reference to Epoxy Resins - Chemistry and Technology, 2d ed., Dekker Inc., New York (1988), pages 212-31, which is specifically incorporated by reference herein for all purposes.

As preferred examples may be mentioned the diglycidyl ethers of bisphenol A; epoxy oligomers from epichlorohydrin and bisphenol A having oxirane end groups and an Mn in the range of from about 300 to about 2000; epoxy oligomers from epichlorohydrin and hydrogenated bisphenol A having oxirane end groups and an Mn in the range of from about 300 to about 2000; 1,3-bis(2,3-epoxyprop-1-oxy) benzene; 1,4-butanediol diglycidyl ether; a diglycidyl ether of polypropylene glycol; a diglycidyl ether of dimerized linoleic acid; epoxydicyclopentyl phenyl glycidyl ether; bis(2,3-epoxycyclopentyl) ether;
bis(2,3-epoxy-6-methylcyclohexylmethyl) adipate;
3,4-epoxycyclohexylmethyl-3,4-epoxycyclohexane carboxylate;
3,4-epoxy-6-methylcyclohexylmethyl-3,4-epoxy-6-methylcyclohexane carboxylate; and dicyclopentadiene dioxide.

When the hybrid polymers are utilized in primer/surfacer applications, the aromatic bisepoxides (e.g., those based upon bisphenol A) are preferred because of their excellent corrosion resistance. Particularly preferred of these are the aofrementioned diglycidyl ethers of bisphenol A, and epoxy oligomers from epichlorohydrin and bisphenol A.

When utilized in clear coating and/or pigmented top coating applications, however, the cycloaliphatic bisepoxides (including those based upon hydrogenated bisphenol A) are preferred because of their excellent ultraviolet light resistance.

As examples of preferred dicarboxylic acids having from 4-40 carbon atoms may be mentioned adipic acid, isophthalic acid, phthalic acid, naphthalene-2,6-dicarboxylic acid, hexahydrophthalic acid, succinic acid, sebacic acid, dodecane dicarboxylic acid, azaleic acid and dimerized fatty acids. Especially preferred are those having from 10 to 40 carbon atoms, particularly the dimerized fatty acids having from 18 to 36 carbon atoms.

The epoxy-terminated poly(epoxyester) is unsaturated fatty acid group functionalized through the reaction of at least a portion of the epoxy groups with one or more unsaturated fatty acids (unsaturated fatty acid component), at least a portion of which include conjugated double bonds.

As examples of suitable unsaturated fatty acids may be mentioned a wide variety of mono- and polyunsaturated fatty acids, and preferably those having from 12 to 26 carbon atoms. As specific suitable examples may be mentioned mono-unsaturated fatty acids such as myristoleic acid, palmitoleic acid, oleic acid, gadoleic acid, erucic acid and ricinoleic acid; di-unsaturated fatty acids such as linoleic acid; tri-unsaturated fatty acids such as linolenic acid, eleostearic acid and licanic acid; tetra-unsaturated fatty acids such as arachidonic acid and clupanodonic acid; and other unsaturated fatty acids prepared from animal or vegetable oils. Normally, natural fatty acids will be utilized which comprise at least 80% of the above-mentioned fatty acids or mixtures thereof.

As mentioned above, the unsaturated fatty acid component must comprise at least a portion, preferably

at least 10 mole%, and especially at least 30 mole%, of a fatty acid with conjugated double bonds, for example, conjugated linoleic acid. The actual amount of conjugated double bond-containing fatty acid will vary depending primarily upon the monomers and initiators used for the grafting of the addition polymer-based chains (B) onto the polymer (A), and also upon the ultimate use of the hybrid polymer.

In general, if more reactive monomers (e.g., acrylic monomers) and initiators are used, it is preferred that the fatty acid component comprise from 10-80 mole%, more preferably 30-60 mole%, of a fatty acid with conjugated double bonds. Under the most reactive conditions, more than 80 mole% fatty acid with conjugated double bonds can result in gellation. On the other hand, if less reactive monomers (e.g., methacrylic monomers) are utilized, it is preferred that the fatty acid component comprise from 50-100 mole% of a fatty acid with conjugated double bonds.

When the hybrid polymer is ultimately utilized in clear coating and/or pigmented top coating applications, the unsaturated fatty acid should comprise at least 30 mole% of the fatty acid with conjugated double bonds. In addition, if the more reactive monomers and initiators are used, it is preferred that the fatty acid component comprise 30-50 mole% fatty acid with conjugated double bonds; if the less reactive monomers and initiators are used, it is preferred that the fatty acid component comprise 50-65 mole% fatty acid with conjugated double bonds.

One skilled in the art, based upon these general guidelines and general knowledge, can readily and appropriately choose the desired unsaturated fatty acid component.

A portion of the unsaturated fatty acid component may be replaced with a monofuctional compound of the general formula (I)

R - X (I)

wherein R represents a hydrocarbon group having from 1 to 40 carbon atoms, more preferably an alkyl, aralkyl, aryl or cycloalkyl group having from 1 to 24 carbon atoms; and X represents a functional group which is reactive with an epoxy group, preferably an amino or carboxyl group, and especially a carboxyl group.

Especially preferred monofunctional compounds are the monocarboxylic acids. As suitable monocarboxylic acids may be mentioned a wide variety of aromatic, araliphatic, aliphatic and cycloaliphatic monocarboxylic acids, preferably having from 2 to 24 carbon atoms. As particularly preferred examples may be mentioned pivalic acid, propionic acid, benzoic acid and stearic acid.

The unsaturated fatty acid is reacted with the epoxy-terminated poly(epoxyester) in an equivalence ratio of carboxyl groups/epoxy groups of at least about 1/4, more preferably at least about 1/2. The combination of the unsaturated fatty acid and monofunctional compound is preferably reacted in an equivalence ratio of carboxyl + X groups/epoxy groups of from about 1/4 to about 1/1, more preferably about 1/2 to about 1/1, and especially about 1/1 so as to result in essentially no residual epoxy functionality.

The unsaturated fatty acid group functionalized poly(epoxyester) may be produced in a conventional manner by reacting the bisepoxide, dicarboxylic acid, unsaturated fatty acid component and optional monofunctional compound in the amounts described above.

Preferably, the reaction should take place in an organic solvent (10-30 wt%) at a temperature of between about 60 °C and about 200 °C. The organic solvent for the reaction should be water miscible. As suitable examples may be mentioned glycol ethers and propyleneglycol ethers, such as methoxypropanol, butoxyethanol, isopropoxypropanol, propoxypropanol, diethyleneglycol dimethylether and N-methyl pyrrolidone. Small amounts of non-water miscible organic solvents may also be utilized, such as ethylmethyl ketone and methylisobutyl ketone.

A catalyst may also be utilized for the reaction between the epoxy groups, and the carboxyl and other functional groups. As suitable examples may be mentioned acid catalysts such as p-toluene sulfonic acid; basic amine, ammonium and phosphonium catalysts such as tetramethylammonium chloride, benzyltrimethylammonium methoxide and triphenylbenzyl phosphonium chloride; and other well-known catalysts such as Cr(III)2-ethylhexanoate, zinc chloride and zinc acetylacetonate.

The hybrid polymer is formed by the addition polymerization of free-radically polymerizable monomers in the presence of the above-described unsaturated fatty acid group functionalized poly(epoxyester). It is believed that the addition polymer-based chains are thereby grafted onto the poly(epoxyester) backbone via the unsaturated functionality resulting from the unsaturated fatty acid.

A wide variety of free-radically polymerizable monomers are suitable for use in producing the addition polymer-based chains. As specific examples may be mentioned ethylenically unsaturated monocarboxylic acids, such as (meth)acrylic acid and crotonic acid; (cyclo)alkyl(meth)acrylates with 1-12 carbon atoms in the (cyclo)alkyl group, such as methyl (meth)acrylate, ethyl (meth)acrylate, propyl(meth)acrylate, isopropyl-(meth)acrylate, butyl(meth)acrylate, 2-ethylhexyl(meth)acrylate, octyl(meth)acrylate, isobornyl(meth)acrylate, dodecyl(meth)acrylate and cyclohexyl (meth)acrylate; dicarboxylic acids such as maleic acid (and anhydride), fumaric acid and itaconic acid (and anhydride); the (cyclo)alkylesters of such dicarboxylic acids with 1-12 carbon atoms in the (cyclo)alkyl groups, such as dimethylmaleate, diethylmaleate, diethylfumarate, dipropylmaleate, dibutylmaleate, dibutylfumarate, 2-ethylhexylmaleate, 2-ethylhexylfumarate, octylmaleate, isobornylmaleate, dodecylmaleate and cyclohexylmaleate; (meth)acrylates with ether groups, such as 2-methoxy-ethylmethacrylate, 2-ethoxy-ethylmethacrylate and 3-methoxy-propylmethacrylate; hydroxyalkyl-(meth)acrylates, such as 2-hydroxyethyl (meth)acrylate, 2-hydroxypropyl (meth)acrylate, 4-hydroxybutylacrylate, 6-hydroxyhexylacrylate, p-hydroxycyclohexyl (meth)acrylate, hydroxypolyethyleneglycol-(meth)acrylates, hydroxypolypropyleneglycol(meth)acrylates and the alkoxy derivative thereof; monovinyl aromatic compounds, such as styrene, vinyltoluene, α-methylstyrene and vinylnaphthelene; other substituted (meth)acrylic compounds, such as (meth)acrylamide, (meth)acrylonitrile N-methylol (meth)acrylamide and N-alkyl (meth)acrylamides; and other monounsaturated compounds such as vinylchloride, vinylacetate, vinylpropionate and vinylpyrrolidone.

Preferred monomer mixtures for use in producing the addition polymer-based chains are those disclosed in EP-B-0000601 (US4245074), which is incorporated by reference herein for all purposes. As a first specific example may be mentioned the following monomer mixture:

35-55 mol% of styrene and/or α-methylstyrene;

20-50 mol% of a compound of the general formula (II)

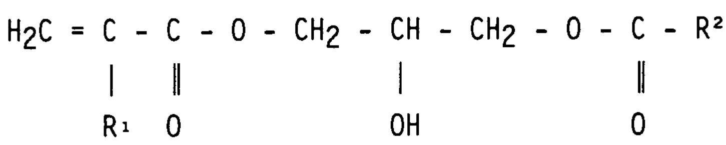

(II)

wherein

$R^1$ is an H atom or a methyl group, and

$R^2$ is an alkyl group with 4-10 carbon atoms; and

0-30 mol% of another monoethylenically unsaturated compound such as described above.

As a second specific example may be mentioned the following monomer mixture:

35-55 mol % of styrene and/or α-methyl styrene;

20-50 mol% of acrylic acid and/or methacrylic acid; and

0-30 mol% of another monoethylencially unsaturated compound such as described above,

wherein the reaction product during or after the polymerization is reacted with a glycidyl ester of a carboxylic acid, having the general formula (III)

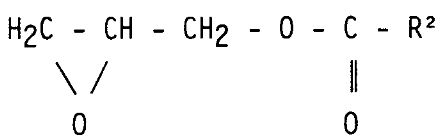

(III)

wherein $R^2$ is as defined above.

The particular monomers and/or monomer mixtures should be chosen in a manner and in an amount so as to result in an addition polymer-based chain having an acid number of between about 20 and about 100 (mg KOH/g). It has been generally found stable dispersions cannot readily be produced when the acid number of the addition polymer-based chains is below about 20, and when the acid number is above about 100 the water-resistance becomes unacceptable. It is especially preferred that the acid number should be in the range of from about 30 to about 80.

The monomers and/or monomer mixtures should also be chosen in a manner and in an amount so as to result in the hybrid polymer comprising:

A) from about 40 wt% to about 90 wt% of the polymer (core) and

B) from about 10 wt% to about 60 wt% of the addition polymer-based chains (shell),

based upon the total weight of the hybrid polymer. As mentioned earlier, within these boundaries it has been found that the hybrid polymers possess the best mixture of advantageous properties from the

individual components.

Of course, the particular choice of monomers and/or monomers mixtures will also depend on a wide variety of other factors such as, for example, the particular end use of the hybrid polymer. These and other factors will be appreciated by one skilled in the art, who can further adjust the choice of monomers accordingly.

The copolymerization of the ethylenically unsaturated monomers in the presence of the unsaturated fatty acid group functionalized poly(epoxyester) is in general conducted under an inert (e.g., nitrogen) atmosphere and in the presence of a radical initiator. The polymerization temperature may generally range from about 60°C to about 200°C, and preferably from about 100°C to about 160°C.

As suitable radical initiators may be mentioned dibenzoyl peroxide, dicumyl peroxide, methylethyl ketone peroxide, cumene hydroperoxide, tert.butyloxy-2-ethylhexanoate, tert.butylperbenzoate, tert.butylcumylperoxide, di-tert.butylperoxy-3,5,5-trimethylcyclohexane and 1,3-bis(tert.butyl)-peroxyisopropylbenzene. Mixtures of the above are also suitable. In general are the radical initiators utilized in amounts of from about 0,05 wt% to about 10 wt%, and preferably from about 1 wt% to about 5 wt%, based upon the total weight of the monomer mixture.

The so-produced hybrid polymers are readily dispersible in an aqueous medium upon at least partial neutralization of the carboxyl groups of the addition polymer-based chains. Suitable neutralizing agents for carboxyl groups include a wide variety of organic and inorganic bases, for example, tertiary amines. The preferred degree of neutralization ranges from about 50% to about 130% on an equivalent basis.

After neutralization, the hybrid polymers may readily be dispersed in an aqueous medium by conventional means, preferably at elevated temperatures from about 50°C to about 100°C. When hybrid polymers according to the present invention are utilized, in many cases stable aqueous dispersions of 40 wt% and even higher may be produced.

Typically, the aqueous dispersions in accordance with the present invention will comprise a solids content of from about 30 wt% to about 60 wt%, and preferably in the range of from about 35 wt% to about 55 wt%.

As indicated earlier, a preferred use of these aqueous dispersions is in the formulation of coating compositions. When so utilized, the coating compositions may also contain a curing agent for the hydroxyl groups of the hybrid polymer.

As suitable hydroxyl group-reactive curing agents may generally be mentioned N-methylol and/or N-methylol ether containing animoplasts. Especially favorable results can be obtained by using a methylol melamine having 4-6 methylol groups per molecule, with at least three of the methylol groups being etherified with methanol, butanol and/or a methanol or butanol condensation product of formaldehyde and N,N'-ethylene diurea. Other suitable curing agents include water dispersible blocked isocyanates, such as those blocked with methylethylketoxime, and isocyanate group-containing adducts of a polyisocyanate and a hydroxycarboxylic acid, for instance, dimethylpropionic acid.

The curing agents reacting with the hydroxyl groups are generally utilized in amounts such that the ratio of the hydroxyl groups of the hybrid polymer to the reactive groups of the curing agent is in the range of from about 0,7 to about 1,5.

Depending upon the field of application, the coating compositions may also contain a variety of other additives common to the paint industry such as pigments, coloring agents, pigment dispersing agents, and thixotropic and other rheological agents. The coating may, if desired, also contain accelerators for the curing reaction, for example, acid compounds such as p-toluene sulfonic acid and blocked derivatives thereof.

The coating compositions may be applied onto any number of well-known substrates such as wood, synthetic materials and metals. Suitable application methods include rolling, spraying, brushing, sprinkling, dipping and electrostaic spraying.

The coating compositions may be dried and cured under a variety of conditions, for example, at ambient temperatures. Accelerated curing may also be accomplished by baking at elevated temperature of generally from 100°C to 160°C for from 20 to 60 minutes.

As mentioned earlier, these coating compositions are suitable for use in a wide variety of applications. They are, however, especially suited for use as primers/surfacers, clear coatings and pigmented top coatings because they can be formulated to result in films possessing a desirable combination of chemical, water and acid resistance, and excellent durability required for the ultimate end use.

The foregoing more general discussion of the present invention will be further illustrated by the following specific examples.

EXAMPLES

Preparation of Dispersions

In the following Examples 1-15, a number of stable aqueous polymer dispersions were prepared in accordance with the present invention. Various properties of these dispersions were measured, and the results are present below in Table I.

In these examples, the mean particle size of the dispersions was determined by dynamic light scattering, the dispersions being diluted with water to a solids content of about 0,1% by weight.

The viscosity of the dispersions was determined with the aid of a Brookfield viscometer.

The solids content of the dispersions was determined in accordance with ASTM method 1644-59, with heating at 130 °C over a period of 30 minutes.

Example 1

In a 2 liter reaction flask fitted with a stirrer, a thermometer, a reflux condenser and a dropping funnel were homogenously mixed:
52,4 g of a dimerized fatty acid (commercially available under the trade designation Pripol 1013 from Unilever),
37,2 g of sebacic acid,
138,0 g of a first epoxy resin (a diglycidyl ether of bisphenol A commercially available under the trade designation Epikote 828 from Shell),
52,4 g of a first unsaturated fatty acid (containing 65% conjugated linoleic acid, commercially available under the trade designation Nouracid DE-656 from Akzo),
60,0 g of 1-methoxy propanol-2 and
0,3 g of Cr(III) 2-ethylhexanoate.

The dropping funnel was filled with a homogenous mixture of:
30,4 g of styrene,
20,7 g of butylmethacrylate,
25,1 g of methacrylic acid,
40,2 g of the glycidyl ester of 1,1-dimethyl-1-heptane carboxylic acid (commercially available under the trade designation Cardura E from Shell),
3,6 g of tert.butylperbenzoate and
40,1 g of 1-methoxy propanol-2.

After ventilating, the reaction flask and dropping funnel were brought under a nitrogen atmosphere. The contents of the reaction flask were then heated to reflux temperature (135 °C-145 °C) and maintained at that temperature for 3 hours, after which the temperature of the reaction flask was brought to 125 °C, the contents of the dropping funnel added, and the reaction mixture temperature maintained at 125 °C for another four hours.

The contents of the reaction flask were then cooled to 100 °C and 11,7 g of N,N-dimethylethanolamine added after which, over a period of two hours, 441 g of demineralized water were also added.

Example 2

Example 1 was repeated in its entirety except for the following.

In the reaction flask were homogenously mixed:
56,2 g of the dimerized fatty acid,
39,8 g of sebacic acid,
147,8 g of the first epoxy resin,
56,2 g of the first unsaturated fatty acid,
65,0 g of 1-methoxy propanol-2 and
0,3 g of Cr(III) 2-ethylhexanoate.

The dropping funnel was filled with a homogenous mixture of:
25,3 g of styrene,
17,3 g of butylmethacrylate,
20,9 g of methacrylic acid,
33,5 g of the glycidyl ester,
3,0 g of tert.butylperbenzoate, and
35,1 g of 1-methoxy propanol-2.

After the cooling of the contents of the reaction flask to 100 °C, 9,7 g of N,N-dimethylethanolamine were

added after which, over a period of two hours, 399,7 g of demineralized water were also added.

Example 3

Example 1 was repeated in its entirety except for the following.

In the reaction flask were homogenously mixed:

92,9 g of the dimerized fatty acid,
61,1 g of the first epoxy resin,
77,4 g of a second epoxy resin (a diglycidyl ether of bisphenol A commercially available under the trade designation Epikote 1001 from Shell),
23,2 g of the first unsaturated fatty acid,
25,4 g of a second unsaturated fatty acid (containing 87% ricinoleic acid, commercially available under the trade designation Nouracid CS-80 from Akzo),
60,0 g of 1-methoxy propanol-2 and
0,3 g of Cr(III) 2-ethylhexanoate.

The dropping funnel was filled with a homogenous mixture of:

29,05 g of styrene,
7,0 g of methylmethacrylate,
25,15 g of acrylic acid,
56,7 g of the glycidyl ester,
2,1 g of dicumyl peroxide, and
40,1 g of 1-methoxy propanol-2.

The polymerization of the acrylic monomers was carried out at 130 °C for 4 hours.

After the cooling of the contents of the reaction flask to 100 °C, 10,9 g of N,N-dimethylethanolamine were added after which, over a period of two hours, 542 g of demineralized water were also added.

Example 4

Example 3 was repeated in its entirety except for the following.

In the reaction flask were homogenously mixed:

99,2 g of the dimerized fatty acid,
65,2 g of the first epoxy resin,
82,7 g of the second epoxy resin,
14,9 g of the first unsaturated fatty acid,
38,0 g of the second unsaturated fatty acid,
65,0 g of 1-methoxy propanol-2 and
0,3 g of Cr(III) 2-ethylhexanoate.

The dropping funnel was filled with a homogenous mixture of:

24,2 g of styrene,
5,8 g of methylmethacrylate,
20,9 g of acrylic acid,
47,3 g of the glycidyl ester,
1,8 g of dicumyl peroxide, and
35,1 g of 1-methoxy propanol-2.

After the cooling of the contents of the reaction flask to 100 °C, 9,1 g of N,N-dimethylethanolamine were added after which, over a period of two hours, 380 g of demineralized water were also added.

Example 5

Example 3 was repeated in its entirety except for the following.

In the reaction flask were homogenously mixed:

105,4 g of the dimerized fatty acid,
69,4 g of the first epoxy resin,
87,9 g of the second epoxy resin,
5,3 g of the first unsaturated fatty acid,
52,0 g of the second unsaturated fatty acid,
70,0 g of 1-methoxy propanol-2 and
0,3 g of Cr(III) 2-ethylhexanoate.

The dropping funnel was filled with a homogenous mixture of:
19,4 g of styrene,
4,6 g of methyl methacrylate,
16,8 g of acrylic acid,
37,8 g of the glycidyl ester,
1,4 g of dicumyl peroxide and
30,1 g of 1-methoxy propanol-2.

After the cooling of the contents of the reaction flask to 100 °C, 7,3 g of N,N-dimethylethanolamine were added after which, over a period of two hours, 262 g of demineralized water were also added.

Example 6

Example 5 was repeated in its entirety except for the following.

In the reaction flask were homogenously mixed:
101,3 g of the dimerized fatty acid,
63,1 g of the first epoxy resin,
97,8 g of the second epoxy resin,
5,3 g of the unsaturated fatty acid,
52,5 g of the second unsaturated fatty acid,
70,0 g of 1-methoxy propanol-2 and
0,3 g of Cr(III) 2-ethylhexanoate.

After the cooling of the contents of the reaction flask to 100 °C, 7,3 g of N,N-dimethylethanolamine were added after which, over a period of two hours, 262 g of demineralized water were also added.

Example 7

Example 5 was repeated in its entirety except for the following.

In the reaction flask were homogenously mixed:
97,0 g of the dimerized fatty acid,
56,7 g of the first epoxy resin,
107,8 g of the second epoxy resin,
5,4 g of the first unsaturated fatty acid,
53,1 g of the second unsaturated fatty acid,
70,0 g of 1-methoxy propanol-2 and
0,3 g of Cr(III) 2-ethylhexanoate.

After the cooling of the contents of the reaction flask to 100 °C, 7,3 g of N,N-dimethylethanolamine were added after which, over a period of two hours, 248 g of demineralized water were also added.

Example 8

Example 3 was repeated in its entirety except for the following.

In the reaction flask were homogenously mixed:
92,9 g of the dimerized fatty acid,
61,1 g of the first epoxy resin,
77,4 g of the second epoxy resin,
23,2 g of the first unsaturated fatty acid,
25,4 g of the second unsaturated fatty acid,
60,0 g of dipropyleneglycol monomethylether,
21,3 g of isopropanol and
0,4 g of Cr(III) 2-ethylhexanoate.

The dropping funnel was filled with a homogenous mixture of:
28,7 g of styrene,
6,9 g of methyl methacrylate,
24,8 g of acrylic acid,
56,1 g of the glycidyl ester,
3,5 g of dicumyl peroxide and
8,0 g of isopropanol.

The contents of the reaction flask were heated to reflux temperature (about 130 °C) and maintained at

reflux for 3 hours, after which the contents of the dropping funnel were added over a period of 1 hour while keeping the reaction mixture at reflux temperature. The reaction mixture temperature was subsequently maintained at reflux for another 3 hours.

After the cooling of the contents of the reaction flask to 100 °C, 10,8 g of N,N-dimethylethanolamine were added after which, over a period of two hours, 553 g of demineralized water were also added.

Example 9

Example 8 was repeated in its entirety except for the following.

The dropping funnel was filled with a homogenous mixture of:
52,9 g of styrene,
17,2 g of 2-hydroxyethyl methacrylate,
36,1 g of butyl methacrylate,
8,7 g of acrylic acid,
5,1 g of dicumyl peroxide and
8,0 g of isopropanol.

After the cooling of the contents of the reaction flask to 100 °C, 10,9 g of N,N-dimethylethanolamine were added after which, over a period of two hours, 553 g of demineralized water were also added.

Example 10

Example 9 was repeated in its entirety except for the following.

In the reaction flask were homogenously mixed:
121,0 g of the dimerized fatty acid,
110,2 g of the first epoxy resin,
23,3 g of the first unsaturated fatty acid,
25,5 g of the second unsaturated fatty acid,
64,0 g of dipropyleneglycol monomethylether,
17,2 g of isopropanol and
0,4 g of Cr(III) 2-ethylhexanoate.

After the cooling of the contents of the reaction flask to 100 °C, 8,7 g of N,N-dimethylethanolamine were added after which, over a period of two hours, 500,5 g of demineralized water were also added.

Example 11

In a 2 liter reaction flask fitted with a stirrer, a thermometer, a reflux condenser and a dropping funnel were homogenously mixed:
140,7 g of the dimerized fatty acid,
90,2 g of a third epoxy resin (a 3,4-epoxycyclohexylmethyl-3,4-epoxycyclohexyl carboxylate commercially available under the trade designation Araldite CY-179 from Ciba-Geigy),
23,4 g of the first unsaturated fatty acid,
25,7 g of the second unsaturated fatty acid,
49,3 g of methylisobutylketone,
20,0 g of dipropyleneglycol monomethylether and
0,4 g of Cr(III) 2-ethylhexanoate.

The dropping funnel was filled with a homogenous mixture of:
54,6 g of styrene,
13,6 g of 2-hydroxyethyl methacrylate,
37,3 g of butyl methacrylate,
11,3 g of acrylic acid,
3,2 g of dicumyl peroxide and
20,0 g of dipropyleneglycolmonomethylether.

After ventilating, the reaction flask and dropping funnel were brought under a nitrogen atmosphere. The contents of the reaction flask were then heated to 120 °C and maintained at that temperature for 3 hours, after which the temperature of the reaction flask was brought to 130 °C, the contents of the dropping funnel added and the reaction mixture temperature maintained at 130 °C for another 3 hours.

After the cooling of the contents of the reaction flask to 100 °C, 14,0 g of N,N-dimethylethanolamine were added after which, over a period of two hours, 677 g of demineralized water were also added.

Example 12

In a 2 liter reaction flask fitted with a stirrer, a thermometer, a reflux condenser and two dropping funnels were homogenously mixed:
235,5 g of a second dimerized fatty acid (commercially available under the trade designation Pripol 1009 from Unilever),
149,6 g of the third epoxy resin,
38,9 g of the first unsaturated fatty acid,
42,6 g of the second unsaturated fatty acid,
82,5 g of methylisobutylketone and
0,7 g of Cr(III) 2-ethylhexanoate.

The first dropping funnel was filled with 70,0 g of diethyleneglycol monobutylether.

The second dropping funnel was filled with a homogenous mixture of:
86,8 g of styrene,
31,2 g of 2-hydroxypropyl methacrylate,
59,3 g of butyl methacrylate,
14,4 g of acrylic acid and
8,3 g of dicumyl peroxide.

After ventilating, the reaction flask and dropping funnels were brought under a nitrogen atmosphere. The contents of the reaction flask were then heated to 120°C and maintained at that temperature for 3 hours, after which the contents of the first dropping funnel were added and the temperature of the reaction flask brought to 130°C. The contents of the second dropping funnel were then added at a constant rate over a period of 2 hours, after which the temperature was maintained at 130°C for another 3 hours.

After the cooling of the contents of the reaction flask to 100°C, 14,3 g of N,N-dimethylethanolamine were added after which, over a period of two hours, 755 g of demineralized water were also added.

Example 13

Example 12 was repeated in its entirety except for the following.

In the reaction flask were homogenously mixed:
237,4 g of the second dimerized fatty acid,
150,8 g of the third epoxy resin,
78,4 g of the first unsaturated fatty acid,
82,6 g of 1-methoxy propanol-2 and
0,7 g of Cr(III) 2-ethylhexanoate.

After ventilating, the reaction flask and dropping funnels were brought under a nitrogen atmosphere. The contents of the reaction flask were then heated to 120°C and maintained at that temperature for 3 hours, after which the contents of the first dropping funnel were added and the temperature of the reaction flask brought to 130°C. The contents of the second dropping funnel were then added at a constant rate over a period of 1 hour, after which the temperature was maintained at 130°C for another 3 hours.

After the cooling of the contents of the reaction flask to 100°C, 14,3 g of N,N-dimethylethanolamine were added after which, over a period of two hours, 922 g of demineralized water were also added.

Example 14

Example 13 was repeated in its enitrety except for the following.

In the reaction flask were homogenously mixed:
254,3 g of the second dimerized fatty acid,
161,6 g of the third epoxy resin,
84,0 g of the first unsaturated fatty acid,
84,9 g of 1-methoxy propanol-2 and
0,7 g of Cr(III) 2-ethylhexanoate.

The second dropping funnel was filled with 166,7 g of the homogenous mixture of monomers.

After the cooling of the contents of the reaction flask to 100°C, 11,9 g of N,N-dimethylethanolamine were added after which, over a period of two hours, 834,2 g of demineralized water were also added.

Example 15

Example 13 was repeated in its entirety except that, after the cooling of the contents of the reaction flask to 100 °C, 10,8 g of N,N-dimethylethanolamine were added after which, over a period of two hours, 733,3 g of demineralized water were also added.

TABLE I

| Properties of the Aqueous Polymer Dispersions | | | | |
|---|---|---|---|---|
| Dispersion of Example | Solids Content (wt%) | Viscosity (Pa.s.) | pH | Mean Particle Size (nm) |
| 1 | 41,5 | 0,44 | 8,9 | 217 |
| 2 | 44 | 0,53 | 8,8 | 284 |
| 3 | 37 | 0,58 | 8,4 | 174 |
| 4 | 44 | 0,92 | 8,2 | 161 |
| 5 | 51 | 0,57 | 7,9 | 281 |
| 6 | 51 | 0,39 | 7,7 | 331 |
| 7 | 52 | 0,50 | 7,8 | 251 |
| 8 | 37 | 0,36 | 8,2 | 92 |
| 9 | 38 | 0,26 | 9,0 | 119 |
| 10 | 40 | 0,59 | 8,9 | 159 |
| 11 | 35 | 0,56 | 8,9 | 74 |
| 12 | 42 | 4,8 | 8,8 | 148 |
| 13 | 38 | 4,5 | 8,8 | 94 |
| 14 | 40 | 1,4 | 8,8 | 150 |
| 15 | 42,5 | 4,2 | 8,6 | 214 |

The following Examples 16-19 are comparative examples demonstrating the effect of utilizing no unsaturated fatty acid (no unsaturated functionality).

Example 16 (Comparative)

Example 2 was repeated in its entirety except for the following.

In the reaction flask were homogenously mixed:

56,2 g of the dimerized fatty acid,
39,8 g of sebacic acid,
147,8 g of the first epoxy resin,
56,2 g of stearic acid,
65,0 g of 1-methoxy propanol-2 and
0,3 g of Cr(III) 2-ethylhexanoate.

After the cooling of the contents of the reaction flask to 100 °C, 9,7 g of N,N-dimethylethanolamine were added after which, over a period of two hours, 399,7 g of demineralized water were also added.

The resulting aqueous dispersion was unstable as phase separation occurred.

Example 17 (Comparative)

Example 8 was repeated in its entirety except for the following.

In the reaction flask were homogenously mixed:

102,7 g of the dimerized fatty acid,
67,6 g of the first epoxy resin,
85,6 g of the second epoxy resin,
24,1 g of dimethylolpropionic acid,
60,0 g of dipropyleneglycol monomethylether,
21,3 g of isopropanol and
0,4 g of Cr(III) 2-ethylhexanoate.

The resulting aqueous dispersion was unstable as phase separation occurred.

Example 18 (Comparative)

Example 8 was repeated in its entirety except for the following.

In the reaction flask were homogenously mixed:

106,9 g of the dimerized fatty acid,
70,3 g of the first epoxy resin,
89,0 g of the second epoxy resin,
13,8 g of propionic acid,
60,0 g of dipropyleneglycol monomethylether,
21,3 g of isopropanol and
0,4 g of Cr(III) 2-ethylhexanoate.

The resulting aqueous dispersion was unstable as phase separation occurred.

Example 19 (Comparative)

Example 13 was repeated in its entirety except for the following.

In the reaction flask were homogenously mixed:

237,5 g of the second dimerized fatty acid,
150,9 g of the third epoxy resin,
78,2 g of stearic acid,
82,6 g of 1-methoxy propanol-2 and
0,7 g of Cr(III) 2-ethylhexanoate.

After the cooling of the contents of the reaction flask to 100°C, 14,3 g of N,N-dimethylethanolamine were added after which, over a period of two hours, 1019,3 g of demineralized water were also added.

The resulting aqueous dispersion was unstable as phase separation occurred.

The following Examples 20-22 are comparative examples demonstrating the effect of utilizing an unsaturated fatty acid but with substantially no conjugated double bonds.

Example 20 (Comparative)

Example 2 was repeated in its entirety except for the following.

In the reaction flask were homogenously mixed:

56,3 g of the dimerized fatty acid,
39,9 g of sebacic acid,
148,1 g of the first epoxy resin,
55,7 g of oleic acid,
65,0 g of 1-methoxy propanol-2 and
0,3 g of Cr(III) 2-ethylhexanoate.

After the cooling of the contents of the reaction flask to 100°C, 9,7 g of N,N-dimethylethanolamine were added after which, over a period of two hours, 399,7 g of demineralized water were also added.

The resulting aqueous dispersion was unstable as phase separation occurred.

Example 21 (Comparative)

Example 20 was repeated in its entirety except for the following.

In the reaction flask were homogenously mixed:

55,3 g of the dimerized fatty acid,
39,9 g of sebacic acid,
145,5 g of the first epoxy resin,
60,0 g of the second unsaturated fatty acid,
65,0 g of 1-methoxy propanol-2 and
0,3 g of Cr(III) 2-ethylhexanoate.

The resulting aqueous dispersion was unstable as phase separation occurred.

Example 22 (Comparative)

Example 13 was repeated in its entirety except for the following.

In the reaction flask were homogenously mixed:

233,7 g of the second dimerized fatty acid,
148,5 g of the third epoxy resin,

84,5 g of the second unsaturated fatty acid,
82,6 g of 1-methoxy propanol-2 and
0,7 g of Cr(III) 2-ethylhexanoate.

The resulting aqueous dispersion was unstable as phase separation occurred.

Preparation of Coating Compositions

In the following Examples 23-41, a number of unpigmented and pigmented coating compositions in accordance with the present invention were prepared by homogenously mixing the dispersion, melamine hardener, optionally demineralized water, optionally 2-butoxy ethanol, optionally diethyleneglycol monobutylether (DEGMBE) and optionally titanium dioxide (pigment) as set forth in Table II.

The melamine hardener used in these Examples was a 90% solids melamine resin commercially available under the trade designation Cymel 327 from American Cyanamid.

The demineralized water was added to adjust the coating compositions to a spray viscosity of about 0,1 Pa.sec. (run-out viscosity of 30 sec. in a Ford Cup No. 4).

The solids contents of these coating compositions were measured in the same manner as described above for the dispersions, and the results are also presented in Table II.

Each of these coating compositions was applied onto a zincphosphate pretreated steel panel (Bonder 132) and cured in a baking oven for 30 minutes at a temperature of 140°C (examples 23-36) or 150°C (examples 37-41). Various properties of the so-obtained coatings were measured, and the results are presented below in Table III.

The Persoz hardness was determined in accordance with French industrial standard NF T30-016, and the results are expressed in seconds. An acceptable minimum for automotive paint is about 180 seconds.

The flexibility of the coatings was determined with a ball impact tester in accordance with ASTM D2794-69 using a ball weight of 0,908 kg, a ball diameter of 15,9 mm and an aperture of 16,3 mm, the results being expressed in kg.cm. An acceptable minimum flexibility for a primer/surfacer for the coat side is about 35 kg.cm, with the maximum measurable value being 85 kg.cm. An acceptable minimum flexibility for a pigmented or clear topcoat for the coat side is about 20 kg.cm.

The coatings were also tested via the Erichsen indentation test with the results being expressed in mm. A test value of higher than 6 is indicative of a flexible coating, and a value of 2 a brittle coating.

The gloss of the coating was determined in accordance with U.S. industrial standard ASTM D-523 at 60° and 20°. A gloss value on a steel substrate of above 80 at 60° is considered high.

TABLE II

| Coating Composition Formulations | | | | | | | | |
|---|---|---|---|---|---|---|---|---|
| Exp. | Disp. | Disp. (grams) | Hardener (grams) | Water (grams) | 2-Butoxy ethanol (grams) | DEGMBE (grams) | Titan. Diox. (grams) | Solids Content (wt%) |
| 23 | Ex. 1 | 100,0 | 15,3 | 2,0 | 2,0 | --- | ---- | 43,3 |
| 24 | Ex. 2 | 100,0 | 16,2 | 3,4 | 2,0 | --- | ---- | 44,9 |
| 25 | Ex. 3 | 100,0 | 13,7 | 3,0 | 1,7 | --- | ---- | 38,9 |
| 26 | Ex. 4 | 100,0 | 16,2 | 5,0 | 2,1 | --- | ---- | 45,3 |
| 27 | Ex. 5 | 100,0 | 18,9 | 6,6 | 2,3 | --- | ---- | 49,7 |
| 28 | Ex. 6 | 100,0 | 18,9 | 8,1 | 2,3 | --- | ---- | 49,3 |
| 29 | Ex. 7 | 100,0 | 19,3 | 10,5 | 2,4 | --- | ---- | 49,1 |
| 30 | Ex. 8 | 100,0 | 13,7 | 2,5 | 1,7 | --- | ---- | 40,5 |
| 31 | Ex. 9 | 100,0 | 14,0 | ---- | 1,8 | --- | ---- | 41,0 |
| 32 | Ex.10 | 100,0 | 14,8 | 3,2 | 1,8 | --- | ---- | 42,1 |
| 33 | Ex. 2 | 100,0 | 16,2 | 27,6 | 2,0 | --- | 57,5 | 54,9 |
| 34 | Ex. 4 | 100,0 | 16,2 | 24,0 | 2,1 | --- | 57,5 | 56,0 |
| 35 | Ex. 8 | 100,0 | 13,7 | 21,9 | 1,7 | --- | 50,5 | 53,6 |
| 36 | Ex.11 | 100,0 | 12,7 | 3,0 | 1,6 | --- | ---- | 36,4 |
| 37 | Ex.12 | 100,0 | 19,9 | 12,5 | --- | 4,6 | ---- | 40,5 |
| 38 | Ex.13 | 100,0 | 18,0 | 7,9 | --- | 4,1 | ---- | 39,4 |
| 39 | Ex.14 | 100,0 | 19,0 | 2,3 | --- | 4,1 | ---- | 43,1 |
| 40 | Ex.15 | 100,0 | 20,3 | 7,3 | --- | 4,3 | ---- | 43,8 |
| 41 | Ex.13 | 100,0 | 18,0 | 15,6 | --- | 4,1 | 43,4 | 52,7 |

TABLE III

Properties of the Coatings

| Coating of Example | Coating Thick. (μm) | Persoz Hard. (sec) | Flexibility (kg.cm) Coated Side | Back Side | Erichsen Indent. (mm) | Gloss 60° | 20° |
|---|---|---|---|---|---|---|---|
| 23 | 40 | 273 | >85 | >85 | 9,1 | 89 | 63 |
| 24 | 41 | 272 | >85 | >85 | 8,6 | 93 | 72 |
| 25 | 38 | 263 | >85 | >85 | 8,7 | 94 | 73 |
| 26 | 37 | 260 | >85 | >85 | 8,5 | 93 | 70 |
| 27 | 38 | 246 | >85 | >85 | 8,8 | 88 | 75 |
| 28 | 41 | 285 | >85 | >85 | 8,8 | 90 | 76 |
| 29 | 39 | 299 | >85 | >85 | 8,5 | 92 | 78 |
| 30 | 36 | 269 | >85 | >85 | 8,4 | 99 | 81 |
| 31 | 37 | 302 | >85 | >85 | 8,3 | 100 | 85 |
| 32 | 40 | 248 | >85 | >85 | 8,2 | 96 | 82 |
| 33 | 40 | 265 | >85 | 70 | 8,4 | 85 | 66 |
| 34 | 39 | 250 | >85 | 80 | 8,0 | 86 | 68 |
| 35 | 39 | 245 | >85 | >85 | 8,1 | 90 | 75 |
| 36 | 43 | 286 | >85 | 48 | 7,7 | 96 | 73 |
| 37 | 39 | 292 | 30 | 2 | 5,4 | 91 | 73 |
| 38 | 41 | 297 | 35 | 8 | 6,3 | 96 | 72 |
| 39 | 44 | 285 | 34 | 8 | 6,7 | 96 | 75 |
| 40 | 44 | 298 | 31 | 7 | 5,8 | 96 | 73 |
| 41 | 40 | 287 | 32 | 6 | 6,0 | 95 | 70 |

Testing of Clearcoats

The coatings of Examples 36-40 are especially suited for use as clearcoats, and were further tested for acid resistance and durability as set forth below. A comparison was also done against a standard acrylic clearcoat ("reference"), which was a conventional thermosetting acrylic commercially applied in automotive production lines.

Zincphosphate steel panels were first coated with a conventional epoxy primer to a dry film thickness of 30μm, cured for 20 minutes at 170°C, then subsequently coated with a conventional polyester/melamine surfacer to a dry film thickness of 40μm, and cured for an additional 20 minutes at 140°C.

In an atmosphere having a relative humidity of 65%, the precoated panels were oversprayed with a waterborne basecoat (such as described in EP-A-0287144, which is incorporated by reference) to a dry film thickness of 15-20μm. The resulting test panels were predried in a baking oven for 15 minutes at a temperature of 60°C, then overcoated with the clear coat to a dry film thickness of 40-45μm and cured for an additional 30 minutes at 150°C.

Acid resistance was tested in accordance with a spot test utilizing a solution of 52% sulfuric acid. The results are presented in Table IV, and are expressed on a scale of 0-5, with 5 indicating no change and 0

indicating failure.

Durability was tested with the aid of a Weather-O-Meter using a carbon arc and a 17/3 cycle for 2000 hours. Gloss was then determined in accordance with ASTM D-523 at 60° (as above), and the results are also presented in Table IV.

TABLE IV

| Coating of Example | Acid Resistance | Gloss before Exposure | Gloss After Exposure |
|---|---|---|---|
| Reference | 0-1 | 88 | 85 |
| 36 | 4-5 | 91 | 89 |
| 37 | 4-5 | 90 | 88 |
| 38 | 4-5 | 91 | 89 |
| 39 | 4-5 | 91 | 89 |
| 40 | 4-5 | 91 | 90 |

Only a limited number of preferred embodiments of the present invention have been described above. One skilled in the art, however, will recognize numerous substitutions, modifications and alterations which can be made without departing from the spirit and scope of the invention as limited by the following claims.

**Claims**

1. A hybrid polymer which comprises (A) a polymer onto which (B) at least one addition polymer-based chain has been grafted, characterized in that:
   i. the polymer (A) comprises an unsaturated fatty acid group functionalized poly(epoxyester), which is the reaction product of
      (1) an epoxy-terminated poly(epoxyester) and
      (2) an unsaturated fatty acid component, at least a portion of which comprises an unsaturated fatty acid with conjugated double bonds;
   ii. the addition polymer-based chain (B) comprises an acid number of from about 20 to about 100; and
   iii. the at least one addition polymer-based chain (B) is grafted onto polymer (A) via the addition polymerization of free-radically polymerizable monomers in the presence of the unsaturated fatty acid group functionalized poly(epoxyester).

2. The hybrid polymer according to claim 1, characterized in that it comprises:
   from about 40 wt% to about 90 wt% of the polymer (A) and from about 10 wt% to about 60 wt% of the addition polymer-based chains (B),
   based upon the total weight of the hybrid polymer.

3. The hybrid polymer according to claim 1, characterized in that the epoxy-terminated poly(epoxyester) comprises the reaction product of:
   n moles of a bisepoxide having a number average molecular weight (Mn) in the range of from about 150 to about 2000, and
   n-1 moles of a dicarboxylic acid having 4-40 carbon atoms, wherein n = 2-10.

4. The hybrid polymer according to claim 3, characterized in that the poly(epoxyester) comprises an Mn in the range of from about 400 to about 20000.

5. The hybrid polymer according to claim 3, characterized in that the poly(epoxyester) comprises an Mn in the range of from about 2000 to about 20000.

6. The hybrid polymer according to claim 3, characterized in that the bisepoxide is selected from a diglycidyl ether of bisphenol A, and epoxy oligomers from epichlorohydrin and bisphenol A.

7. The hybrid polymer according to claim 3, characterized in that the bisepoxide is selected from cycloaliphatic bisepoxides, and epoxy oligomers from epichlorohydrin and hydrogenated bisphenol A.

8. The hybrid polymer according to claim 3, characterized in that the dicarboxylic acid comprises a dimerized fatty acid.

9. The hybrid polymer according to claim 1, characterized in that the unsaturated fatty acid comprises at least 10 mole% of a fatty acid with conjugated double bonds.

10. The hybrid polymer according to claim 9, characterized in that the unsaturated fatty acid comprises at least 30 mole% of a fatty acid with conjugated double bonds.

11. The hybrid polymer according to claim 1, characterized in that the unsaturated fatty acid has from 12 to 26 carbon atoms.

12. The hybrid polymer according to claim 1, characterized in that a portion of the unsaturated fatty acid is replaced with a monofuctional compound of the general formula (I)

R - X (I)

wherein
R is a hydrocarbon group having from 1 to 40 carbon atoms, and
X is a functional group which is reactive with an epoxy group.

13. The hybrid polymer according to claim 12, characterized in that R is alkyl, aralkyl, aryl or cycloalkyl group having from 1 to 24 carbon atoms, and X is an amino or carboxyl group.

14. The hybrid polymer according to claim 13, characterized in that the monofunctional compound comprises a monocarboxylic acid.

15. The hybrid polymer according to claim 1 or 12, characterized in that the unsaturated fatty acid is utilized in an equivalence ratio of carboxyl groups/epoxy groups of at least about 1/4.

16. The hybrid polymer according to claim 15, characterized in that the unsaturated fatty acid is utilized in an equivalence ratio of carboxyl groups/epoxy groups of at least about 1/2.

17. The hybrid polymer according to claim 15, characterized in that the combination of the unsaturated fatty acid and monofunctional compound is utilized in an equivalence ratio of carboxyl + X groups/epoxy groups of from about 1/4 to about 1/1.

18. A water-dispersible hybrid polymer comprising the hybrid polymer according to any one of claims 1-17, wherein the acid groups of the hybrid polymer are at least partially neutralized.

19. An aqueous dispersion based upon the water-dispersible hybrid polymer according to claim 18.

20. An aqueous coating composition based upon the aqueous dispersion according to claim 19.

21. The aqueous coating composition according to claim 20, characterized in that it further comprises a curing agent for the hydroxyl groups of the hybrid polymer.

22. A primer/surfacer based upon the aqueous coating composition according to claim 20, wherein the bisepoxide of the unsaturated fatty acid group functionalized poly(epoxyester) is selected from a diglycidyl ether of bisphenol A, and epoxy oligomers from epichlorohydrin and bisphenol A.

23. A clearcoat based upon the aqueous coating composition according to claim 20, wherein the bisepoxide of the unsaturated fatty acid group functionalized poly(epoxyester) is selected from cycloaliphatic bisepoxides, and epoxy oligomers from epichlorohydrin and hydrogenated bisphenol A.

**24.** A pigmented top coating based upon the aqueous coating composition according to claim 20, wherein the bisepoxide of the unsaturated fatty acid group functionalized poly(epoxyester) is selected from cycloaliphatic bisepoxides, and epoxy oligomers from epichlorohydrin and hydrogenated bisphenol A.

**25.** A method of producing the hybrid polymer of any one of claims 1-17, comprising the step of grafting the at least one addition polymer-based chain (B) onto polymer (A) via the addition polymerization of free-radically polymerizable monomers in the presence of the unsaturated fatty acid group functionalized poly(epoxyester).

**26.** A method of producing an aqueous dispersion by at least partially neutralizing the acid groups of the hybrid polymer of any one of claims 1-17 and dispersing the so-neutralized hybrid polymer in an aqueous base.

European Patent Office

# EUROPEAN SEARCH REPORT

Application Number

**EP 91 20 0865**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 166 054 (MEESKE ET AL)<br>* column 2, line 24 - line 56; claims * * | 1-26 | C 08 F 299/02<br>C 08 G 59/14<br>C 08 G 59/42<br>C 09 D 163/10 |
| Y,D | US-A-4 564 648 (HUYBRECHTS ET AL)<br>* the whole document * * | 1-26 | |
| A | CHEMICAL ABSTRACTS, vol. 90, no. 16, April 1979, Columbus, Ohio, US; abstract no. 123222Q, page 89 ;column R ; & JP-A-79 03,192 (DeSoto, Inc) 11 Jan 1979<br>* abstract * * | 1-26 | |
| A | US-A-3 564 074 (SWISHER ET AL)<br>* the whole document * * | 1-26 | |

TECHNICAL FIELDS SEARCHED (Int. Cl.5)

C 08 F
C 08 G
C 09 D

The present search report has been drawn up for all claims

| Place of search | Date of completion of search | Examiner |
|---|---|---|
| The Hague | 11 November 91 | IRAEGUI RETOLAZA E. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document